Europäisches Patentamt

**European Patent Office** (11) Numéro de publication: **0 133 856**

**Office européen des brevets** A1

## DEMANDE DE BREVET EUROPEEN

(21) Numéro de dépôt: **83201548.1**

(51) Int. Cl.⁴: **A 22 C 7/00**

(22) Date de dépôt: **28.10.83**

(30) Priorité: **22.07.83 BE 211217**

(71) Demandeur: **Mertens, Gustaaf, Ring 19, B-2420 Noorderwijk (BE)**

(43) Date de publication de la demande: **13.03.85 Bulletin 85/11**

(72) Inventeur: **Mertens, Gustaaf, Ring 19, B-2420 Noorderwijk (BE)**

(84) Etats contractants désignés: **AT CH DE FR GB IT LI LU NL SE**

(74) Mandataire: **Pieraerts, Jacques et al, Bureau Gevers S.A. rue de Livourne 7, Bte. 1, B-1050 Bruxelles (BE)**

(54) **Machine pour la production de boulettes de hachis.**

(57) Cette invention comporte une machine pour la production de boulettes de hachis qui consiste essentiellement en: un tambour rotatif (4) présentant des rainures circulaires (14) et un couvercle courbe (11) coopérant avec ce tambour (4), couvercle qui présente intérieurement des rainures (15), des moyens étant prévus pour écarter périodiquement ledit couvercle courbe (11) du tambour (4) et le raccorder à ce tambour.

ACTORUM AG

"Machine pour la production de boulettes de hachis"

--------------------------------------------------------

L'invention concerne une machine pour la production de boulettes de hachis.

Le but de l'invention est de proposer une machine qui, à partir d'un boudin de viande hachée, roule des boulettes qui présentent toutes des dimensions uniformes et qui, si on considère la production , ne nécessite que peu de travail manuel.

Un autre but de l'invention est de réaliser une structure de machine d'une telle simplicité que son entretien ne pose aucun problème.

A cet effet, la machine selon l'invention consiste essentiellement en :

a) un châssis comportant à la partie supérieure une table présentant une fente longitudinale, un tambour rotatif monté sous cette table, dont la paroi périphérique porte des rainures circulaires, tambour qui affleure sensiblement le plan supérieur de la table;

b) un couvercle courbe coopérant avec ce tambour, qui présente des rainures internes qui se trouvent dans le même plan que les rainures ménagées dans le tambour rotatif;

c) des moyens pour écarter périodiquement ledit couvercle dudit tambour et pour raccorder à nouveau ce couvercle à ce tambour et cela de telle sorte qu'un boudin de viande hachée déposé sur le tambour précité soit saisi et découpé et ensuite roulé sous forme de boulettes entre le tambour et le couvercle.

Selon une autre caractéristique de l'invention, le couvercle courbe précité est monté à basculement par rapport au châssis de la machine.

Une particularité de l'invention réside dans le fait que les rainures circulaires ménagées sur le tambour précité et les rainures internes du couvercle présentent une section pratiquement hémicirculaire.

D'autres détails et avantages de l'invention ressortiront de la description qui sera donnée ci-après d'une machine pour la production de boulettes de hachis, selon l'invention. Cette description n'est donnée qu'à titre d'exemple et ne limite pas l'invention.

Les notations de référence se rapportent aux figures annexées.

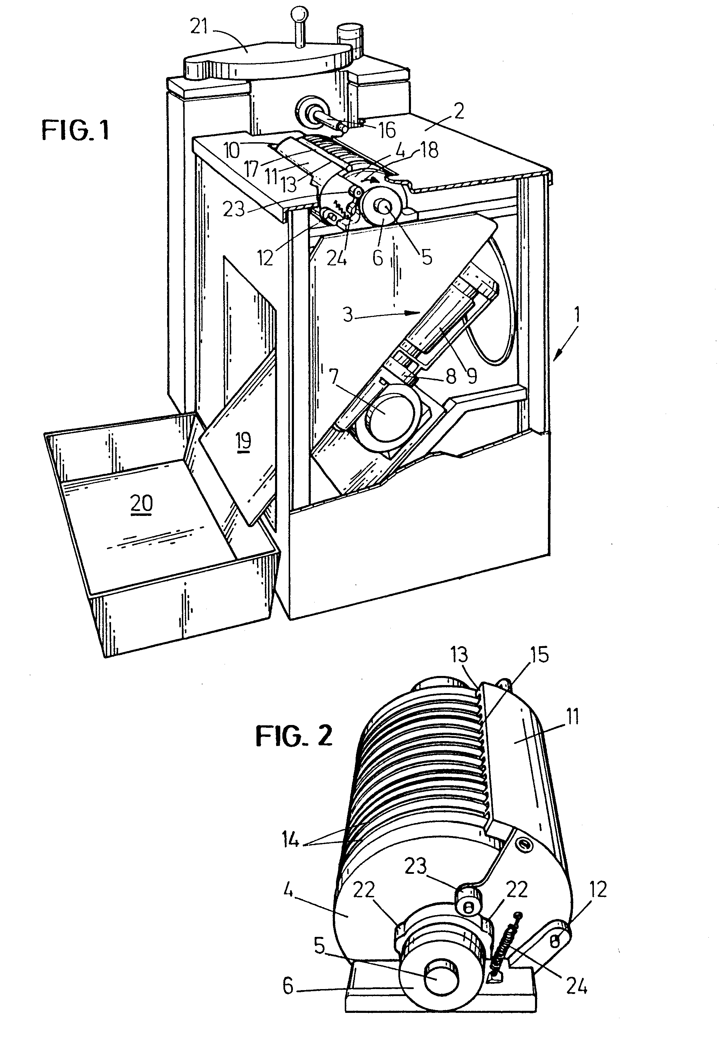

La figure 1 est une représentation en perspective, avec brisures partielles, de la machine selon l'invention.

La figure 2 représente, à une plus grande échelle, et également selon une représentation en perspective, le tambour de la machine et le couvercle qui coopère avec celui-ci.

La machine selon ces figures comporte un châssis désigné par la référence générale 1.

Dans le châssis 1 sont prévus des moyens d'entraînement moteur qui sont désignés par la référence générale 3. Ces moyens assurent la rotation constante du tambour 4. L'arbre d'entraînement 5 de ce tambour 4 porte une poulie 6 qui communique son mouvement de rotation à l'aide d'une courroie non représentée à une poulie 7 qui est montée sur les réducteurs 8 du moteur 9.

Le tambour 4 fait saillie hors de la table 2, au-travers d'une fente longitudinale 10 prévue dans la table 2.

Un couvercle courbe 11 coopère avec le tambour 4 animé d'une rotation continue. Ce couvercle est monté à charnière en 12 par rapport au châssis 1 ou par rapport à un élément relié de manière fixe à ce châssis.

Des cames 22 sont prévues sur l'arbre d'entraînement 5 afin de buter, au cours de la rotation de l'arbre, contre un galet 23 monté sur le couvercle. Ceci fait "basculer" le couvercle. Le rebord antérieur 13 de celui-ci est donc périodiquement soulevé du tambour. Le couvercle est maintenu appliqué sur le tambour à l'aide d'un ressort 24.

Le tambour 4 à mouvement de rotation continue et le couvercle 11, basculant périodiquement, portent respectivement sur leur surface extérieure et leur surface intérieure des rainures 14 et 15 respectivement. Selon une coupe transversale, les rainures 14 et 15 présentent la forme de demi-cercles.

La distance entre deux rainures est réduite au minimum.

On opère avec cette machine

4     0133856

de la manière suivante :

1) la viande hachée sort d'un conduit cylindrique 16 et provient d'une installation qui est désignée par la référence générale 21.

2) L'opérateur de la machine dépose le boudin 17 de viande hachée ainsi formé sur la partie supérieure du tambour 4 et cela parallèlement à son axe longitudinal(le sens de rotation du tambour 4 est indiqué par la flèche 18).

3) A un moment donné, la face antérieure 13 du couvercle 11 est suffisamment soulevée pour que le boudin de viande 17 soit entraîné , grâce à la rotation du tambour 4, sous le couvercle 11.

4) Grâce à la rotation continue du tambour 4 et en raison du fait que le couvercle 11 est ramené en direction du tambour 4, le boudin 17 est coupé en morceaux et roulé sous forme de boulettes.

5) Les portions de hachis ainsi découpées et roulées tombent sur une plaque 19 disposée obliquement et fait saillie, à l'arrière de la machine, au-travers d'une paroi du châssis 1. Les boulettes de hachis tombent dans un récipient 20.

Une plaque dentée,qui n'est pas visible aux figures, pénètre par ses dentelures dans les rainures 14 du tambour 4 afin de détacher les boulettes de hachis hors des rainures.

De la description qui vient d'être donnée d'une machine selon l'invention, il ressort clairement qu'il est possible de produire un grand nombre de boulettes de hachis de manière semi-automatique et en faisant usage d'éléments qui sont d'un entretien aisé.

Le fonctionnement semi-automatique de la machine, c'est-à-dire l'amenée par l'opérateur de la machine d'un boudin de viande 17, peut évidemment être remplacée par des moyens automatiques. Il est donc évident que l'invention n'est pas limitée à la forme d'exécution décrite et que bien des modifications pourraient y être apportées sans sortir du cadre de la présente demande de brevet.

0133856

REVENDICATIONS.

1. Machine pour la production de boulettes de hachis, caractérisée en ce qu'elle consiste essentiellement en :

a) un châssis 1 comportant à la partie supérieure une table 2 présentant une fente longitudinale 10, un tambour rotatif 4 monté sous cette table 2, dont la paroi périphérique porte des rainures circulaires 14, tambour qui affleure sensiblement le plan supérieur de la table 2;

b) un couvercle courbe 11 coopérant avec ce tambour 4, qui présente des rainures internes 15 qui se trouvent dans le même plan que les rainures 14 ménagées dans le tambour rotatif 4;

c) des moyens pour écarter périodiquement ledit couvercle 11 du tambour rotatif 4 et pour raccorder à nouveau ce couvercle à ce tambour, et cela de telle sorte qu'un boudin 17 de viande hachée déposé sur le tambour 4 précité soit saisi et découpé et ensuite roulé sous forme de boulettes entre le tambour 4 et le couvercle 11.

2. Machine selon la revendication 1, caractérisée en ce que le couvercle courbe 11 précité est monté à basculement par rapport au châssis 1 de la machine.

3. Machine selon l'une quelconque des revendications 1-2, caractérisée en ce que les rainures circulaires 14 ménagées sur le tambour précité 4 et les rainures internes 15 du couvercle 11 présentent une section pratiquement hémicirculaire.

4. Machine selon la revendication 3,

7

0133856

caractérisée en ce que la distance séparant les
rainures précitées est réduite au minimum.

FIG.1

FIG. 2

Office européen
des brevets

**RAPPORT DE RECHERCHE EUROPEENNE**

0133856

Numéro de la demande

EP 83 20 1548

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | BE-A- 531 136 (MARTIN) <br> * en entier * <br><br> ----- | 1-4 | A 22 C 7/00 |
| | | | |
| | | | **DOMAINES TECHNIQUES RECHERCHES (Int. Cl. 3)** |
| | | | A 22 C |

Le présent rapport de recherche a été établi pour toutes les revendications

| Lieu de la recherche | Date d'achèvement de la recherche | Examinateur |
|---|---|---|
| LA HAYE | 18-09-1984 | DE LAMEILLIEURE D. |